Europäisches Patentamt

(19) European Patent Office

Office européen des brevets

(11) Veröffentlichungsnummer: **0 123 974**
**B1**

(12) **EUROPÄISCHE PATENTSCHRIFT**

(51) Int. Cl.⁴: **B 32 B 27/32,** B 65 D 65/40

(45) Veröffentlichungstag der Patentschrift:
**24.06.87**

(21) Anmeldenummer: **84103999.3**

(22) Anmeldetag: **10.04.84**

(54) **Mehrlagige Tiefziehfolie und tieffrostbeständige Vakuumtiefziehpackung.**

(30) Priorität: **29.04.83 DE 3315582**

(43) Veröffentlichungstag der Anmeldung:
**07.11.84 Patentblatt 84/45**

(45) Bekanntmachung des Hinweises auf die Patenterteilung:
**24.06.87 Patentblatt 87/26**

(84) Benannte Vertragsstaaten:
**AT BE CH DE FR GB IT LI NL SE**

(56) Entgegenhaltungen:
**EP - A - 0 093 423
DE - A - 2 031 036
FR - A - 2 173 119
FR - A - 2 276 918
GB - A - 1 214 656
GB - A - 1 318 745
US - A - 4 239 111**

(73) Patentinhaber: **Helio Folien Gmbh, Gladbacher Strasse 189, D-4060 Viersen 1 (DE)**

(72) Erfinder: **Engelsberger, Herbert, Heimbachstrasse 13, D-4060 Viersen 1 (DE)**

## Beschreibung

Die Erfindung betrifft die Verwendung einer mehrlagigen koextrudierten Verbundfolie insbesondere für die Herstellung von tieffrostbeständigen Vakuumtiefzieh-Verpackungen oder für die Vakuumtiefziehverpackung scharfkantiger Verpackungsgüter.

Mehrlagige Tiefziehfolien (Unterfolien) zur Herstellung von tieffrostbeständigen Verpackungen nach dem Vakuumtiefziehverfahren sind bekannt. Weit verbreitet sind Laminate aus einer Polyamidfolie und einer darauf kaschierten Polyäthylenfolie. Eine solche Folie ist mittels ihrer Polyäthylenlage ausgezeichnet verschweissbar, hat aber den Nachteil, dass in der Regel zwei Arbeitsgänge zur Herstellung der beiden Folienlagen und ein weiterer Arbeitsgang zur Verbindung der Folienlagen notwendig sind. Der entscheidende Nachteil liegt darin, dass zur Erzielung einer ausreichenden Durchstossfestigkeit eine der beiden Folienlagen aus dem relativ teuren Rohstoff Polyamid bestehen muss.

Es sind auch Verfahren zur Herstellung von koextrudierten Verbundfolien bekannt geworden, deren Anwendung die Herstellung einer zwei- oder mehrlagigen Folie in einem Arbeitsgang ermöglicht. Im wesentlichen werden nach diesen Verfahren Verbundfolien hergestellt, die in drei Gruppen unterteilt werden können:

Unter Verwendung von zwei oder mehr ringartig angeordneten Düsen hergestellte Schläuche, die

a) als solche zur Herstellung von Beutelverpackungen verwendet werden,

b) in gleicher Weise hergestellte Schlauchfolien, bei denen jedoch ein Auftrennen des Schlauches vorgenommen und die Folie als Flachfolie verwendet wird.

In beiden Fällen entstehen, z.B. bei Verwendung von zwei Ringdüsen, jeweils Folien mit zwei miteinander verbundenen Lagen. Solche Folien und Verfahren sind in der DE-A-11 36 818 und in der DE-B-12 89 297 beschrieben.

c) Koextrudierte Verbundschläuche, deren einzelne Lagen z.B. durch Versiegeln so zu einer einheitlichen Verbundfolie vereinigt sind, dass ein Ablösen der einzelnen Lagen voneinander nicht mehr möglich ist (DE-A-19 66 466 und 21 02 377).

Auf alle diese mehrlagigen Folien trifft der oben beschriebene Nachteil einer unzureichenden Durchstossfestigkeit zu, sofern nicht mindestens eine der Lagen aus dem relativ teuren Rohstoff Polyamid besteht.

Ein weiterer Nachteil der bekannten Tiefziehfolien, der insbesondere bei komplizierteren Tiefziehformen auftritt, ergibt sich aus der hohen Sperrigkeit der Polyamid- oder Polyesterlagen. Infolge dieser Sperrigkeit ist eine formgenaue Ausbildung der Tiefziehfolie nicht immer möglich.

Die Erfindung hat sich die Aufgabe gestellt, die bekannten Nachteile zu überwinden und eine hochzähe und durchstossfeste Verpackungsfolie zur Verfügung zu stellen, die in einem einzigen Arbeitsgang sowohl unter Einsatz kostengünstiger Rohstoffe als auch insgesamt ohne in wirtschaftlicher Hinsicht höheren Materialverbrauch hergestellt werden kann. Insbesondere will die Erfindung eine tiefziehbare Folie, worunter im Sinne der vorliegenden Anmeldung die Unterfolie einer Tiefziehpackung zu verstehen ist, für tieffrostbeständige Vakuumtiefziehverpackungen und für die Vakuumtiefziehverpackung scharfkantiger Verpackungsgüter zur Verfügung zu stellen.

Zur Lösung dieser Aufgabe greift die Erfindung auf die in der nicht vorveröffentlichten EP-A-00 93 423 beschriebene, dem Stand der Technik zuzurechnende Verbundfolie zurück. Die EP-A-00 93 423 sieht zunächst die Herstellung einer koextrudierten Verbundfolie mit zwei in Material und Dicke übereinstimmenden Aussenlagen und zwei in Material und Dicke übereinstimmenden Innenlagen vor, wobei die Innenlagen durch Verblockung verbunden sind. Anschliessend erfolgt die Verklebung dieser Verbundfolie mit einer Trägerfolie. Erfindungsgemäss ist nun die Verwendung der aus dem Stand der Technik bekannten Verbundfolie als selbständige Tiefziehfolie entsprechend den Merkmalen des Hauptanspruches vorgesehen.

Im Vergleich zu den bisher bekannten mehrlagigen Tiefziehfolien für tieffrostbeständige Vakuumtiefziehverpackungen oder für die Vakuumverpackung scharfkantiger Verpackungsgüter zeichnet sich die erfindungsgemäss zu verwendende Tiefziehfolie dadurch aus, dass sie aus im Vergleich zu Polyamid wesentlich kostengünstigeren Rohstoffen, wie aus linearem Polyäthylen oder High-Density-Polyäthylen bzw. aus Äthylen-Vinylacetatcopolymeren oder aus mit Metallionen vernetzten Äthylen-Methycrylsäurecopolymeren besteht. Ohne dass die erfindungsgemäss zu verwendende Tiefziehfolie über eine höhere Dicke als die bekannten Tiefziehfolien verfügt, weist sie überraschenderweise eine gleichgute Zähigkeit und Durchstossfestigkeit auf. Die ausgezeichnete Festigkeit der erfindungsgemäss zu verwendenden Tiefziehfolie erklärt sich einmal durch die hohe mechanische Schockfestigkeit der zur Herstellung von Aussen- und Innenlagen verwendeten Rohstoffgruppen, die im Einzelfall, z.B. bei den zu den linearen Polyäthylenen zählenden linear-low-density-Polyäthylen (LLDPE) Spitzenwerte bis zu 175 cN erreichen kann. Im Fall der ebenfalls zur Herstellung der Innenlagen geeigneten mit Metallionen vernetzten Äthylen-Methacrylsäurecopolymeren liegt die mechanische Schockfestigkeit noch wesentlich höher und kann bis zu ca. 450 cN betragen.

In der vorliegenden Anmeldung beruhen alle Angaben der mechanischen Schockfestigkeit auf der Messung nach ASTM D-1709-62 bei einer Fallhöhe von 650 mm und einer Foliendicke von 25 µm.

Zum zweiten erklärt sich die hohe Durchstossfestigkeit aus der Massnahme, die Aussenlagen eines koextrudierten Schlauches flächig mit den Innenlagen während der Extrusion durch

Schmelzverbindung, die Innenlagen aber nur durch Verblockung miteinander zu verbinden.

Unter Verblockung wird dabei die Verbindung zwischen den Innenlagen verstanden, die eine mechanische Lösbarkeit dieser beiden Lagen ermöglicht. Vorzugsweise ist die durch das Verblocken der Innenlagen erzielte Verbundhaftung nicht grösser als 100 cN/cm. Die Verblockung erfolgt zweckmässigerweise unter Anwendung von Wärme und Druck mittels eines Quetschwalzenpaares.

Im Gegensatz zu den aus der DE-A-21 02 377 bekannten Folien, bei denen die Trennbarkeit der einzelnen Schichten in der fertigen Verbundfolie ausdrücklich ausgeschlossen ist, erfolgt bei der erfindungsgemäss zu verwendenden Tiefziehfolie infolge der lediglich durch Verblockung miteinander verbundenen Innenlagen ein Riss-Stop, der sich wie folgt erklärt:

Wirkt auf die Tiefziehfolie eine Durchstossbelastung, z.B. durch einen vom Inneren einer Tiefziehpackung auf die Tiefziehfolie drückenden scharfkantigen Knochen ein, kann an der beanspruchten Stelle ein Riss der beiden durch Schmelzverbindung verbundenen Folienlagen – Aussenlage/Innenlage – eintreten, die der beanspruchten Stelle unmittelbar benachbart sind. Zur Zerstörung der beiden weiteren Lagen der Tiefziehfolie – Innenlage/Aussenlage – müsste der scharfkantige Knochen aber den Einreisswiderstand dieser beiden Lagen an der Verblockungsstelle erneut überwinden, um auch diese beiden Lagen einreissen zu können. Da der Einreisswiderstand bei allen flächigen Gebilden aber höher ist als die Fortreissfestigkeit, wird der Durchstosskraft des Knochens an dieser Stelle ein Widerstand entgegengesetzt, der die erfindungsgemäss zu verwendende Tiefziehholie vor einer weitergehenden Zerstörung bewahrt und die Dichtigkeit der Verpackung garantiert.

Zur Erzielung eines optimalen Tiefziehverhaltens versteht es sich, dass die erfindungsgemäss zu verwendende, durch Koextrusion erhaltene vierlagige Folie im ungereckten Zustand belassen wird.

Unter linearen Polyäthylenen werden im Sinne der vorliegenden Erfindung solche Polyäthylene verstanden, die durch Copolymerisation von Äthylen mit geringfügigen Anteilen von $\alpha$-Olefincomonomeren ($C_3$ bis $C_{12}$) hergestellt werden. Besonders geeignet ist LLDPE (linear-low-density-Polyäthylen) mit einer Dichte von 0,918 bis 0,945 g/cm³, bevorzugt von 0,922 bis 0,930 g/cm³. Der Schmelzindex dieses Polyäthylens liegt bei 0,2 bis 4,0, bevorzugt bei 0,8 bis 1,5. Diese Stoffklasse ist für die Zwecke der vorliegenden Erfindung besonders geeignet, weil infolge der hohen Zähigkeit von LLDPE dadurch bei der erfindungsgemäss zu verwendenden Tiefziehfolie eine besonders hohe Durchstossfestigkeit erzielt werden kann. Aus dem gleichen Grunde ist auch HDPE mit einer Dichte von mindestens 0,935 g/cm³, bevorzugt 0,950 bis 0,965 g/cm³ und einem Schmelzindex von 0,2 bis 4,0, ein für die Zwecke der Erfindung hervorragend geeigneter Werkstoff.

Die bei der erfindungsgemäss zu verwendenden Verbundfolie zur Herstellung der Innenlagen verwendeten Copolymere des Äthylens mit Vinylacetat, bzw. die mit Metallionen vernetzten Äthylen-Methacrylsäurecopolymeren, die auch als Ionomerharze bezeichnet werden und von der Firma Dupont unter dem Handelsnamen «Surlyn» vertrieben werden, sind gut miteinander verblockbar, gewährleisten aber beim Tiefziehen trotzdem noch eine gewisse Beweglichkeit, d.h.: Die beiden Aussenlagen, die jeweils mit den Innenlagen durch Schmelzverbindung miteinander verbunden sind, sind an der Stelle, an der die beiden Innenlagen miteinander verblockt sind, noch geringfügig gegeneinander beweglich, so dass beim Tiefziehvorgang die das Innere der Tiefziehmulde bildende Aussenlage aus z.B. LDPE und eine damit durch Schmelzverbindung verbundene Innenlage aus z.B. Äthylen-Vinylacetatcopolymeren nicht automatisch bei der Ausbildung der Tiefziehmulde einer gleichstarken Dehnung unterliegt, wie die andere aussenliegende, aus LDPE bestehende und mit einer Innenlage aus Äthylen-Vinylacetatcopolymeren verbundene Aussenlage der mehrlagigen Folie.

Wenngleich die mit Metallionen vernetzten Äthylen-Methacrylsäurecopolymeren, von denen insbesondere die mit Natrium- oder Zinkionen vernetzten bevorzugt sind, über eine besonders hohe mechanische Schockfestigkeit verfügen und auch ein ausgezeichnetes Blockverhalten besitzen, bleibt ihr Einsatz wenigen Spezialzwecken vorbehalten, z.B. dort, wo eine extrem hohe Durchstossfestigkeit verlangt wird oder z.B. dort, wo eine insgesamt geringe Dicke der mehrlagigen Tiefziehfolie gewünscht wird und infolgedessen die Innenlagen mit einer relativ geringen Dicke aus einem Material herzustellen sind, das über eine besonders hohe mechanische Schockfestigkeit verfügt. Für die meisten Zwecke der Erfindung haben sich jedoch die Copolymere des Äthylen-Vinylacetats als ausgezeichnet geeignet erwiesen und sind deshalb für die erfindungsgemäss zu verwendende Verbundfolie besonders bevorzugt.

In einer besonders bevorzugten Ausführungsform sieht die erfindungsgemäss zu verwendende Verbundfolie Innenlagen aus einem Äthylen-Vinylacetatcopolymeren vor, das 8 bis 35 Gew.-%, bevorzugt 15 bis 28 Gew.-% Vinylacetat enthält. Die Verwendung dieser Äthylen-Vinylacetatcopolymere mit einem Schmelzindex von 0,5–8, bevorzugt 1,5–4 g/ 10min bei 190 °C und 2,16 kg Last gemäss DIN 53735, garantiert eine besonders gute Schmelzverbindung mit den Aussenlagen aus linearem Polyäthylen oder High-Density-Polyäthylen bei der Koextrusion und verleiht der mehrlagigen Tiefziehfolie eine ausserordentlich hohe Elastizität und Durchstossfestigkeit. Eine weitere bevorzugte Ausführungsform der vorliegenden Erfindung sieht bei der erfindungsgemäss zu verwendenden koextrudierten Verbundfolie eine Gesamtdicke zwischen 100 und 300 μm vor, wobei auf die Aussenlagen eine Dicke von nicht mehr als $4/5$ und nicht weniger als $1/2$ und auf die Innenlagen eine Dicke von nicht mehr als $1/2$ und nicht weniger als $1/5$ entfällt. Für die Anwendung in tieffrostbeständigen Tiefziehverpackungen hat sich eine Gesamtdicke der erfindungsgemässen Folie von 190 bis 250 μm als besonders geeignet erwiesen.

Zur weiteren Erklärung wird die Erfindung anhand des Beispiels und der Figuren 1 bis 3 näher erläutert, ohne dass die Erfindung durch die gezeigten und beschriebenen Ausführungsformen beschränkt ist.

Figur 1 zeigt in schematischer Darstellung einen im Querschnitt dargestellten zweilagigen koextrudierten Blasschlauch.

Figur 2 zeigt im Querschnitt den gleichen Schlauch, jedoch im verblockten Zustand.

Figur 3 zeigt in einer Schnittdarstellung eine Vakuumtiefziehverpackung mit einer erfindungsgemäss verwendeten koextrudierten Verbundfolie als Unterfolie.

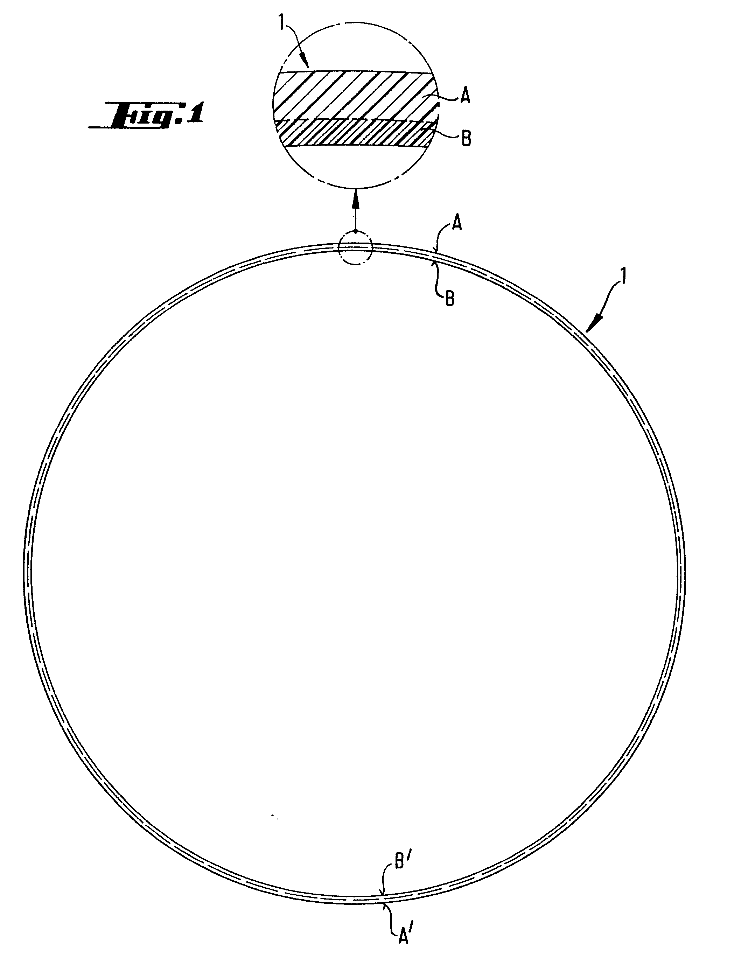

In Figur 1 sind mit A, A' die äussere, bzw B, B' die innere Schicht eines koextrudierten Blasschlauches 1 bezeichnet. Die äussere Lage A, A' besteht aus LLDPE, einer mechanischen Schockfestigkeit von 170 cN und einem Schmelzindex von 1,0 und einer Dichte von 0,930 g/cm³, während die Innenlagen B, B' aus einem Äthylen-Vinylacetatcopolymeren mit 25 Gew.-% Vinylacetatanteil und einem Schmelzindex von 3 hergestellt sind. Lagen A und B sind durch Schmelzbindung miteinander verbunden.

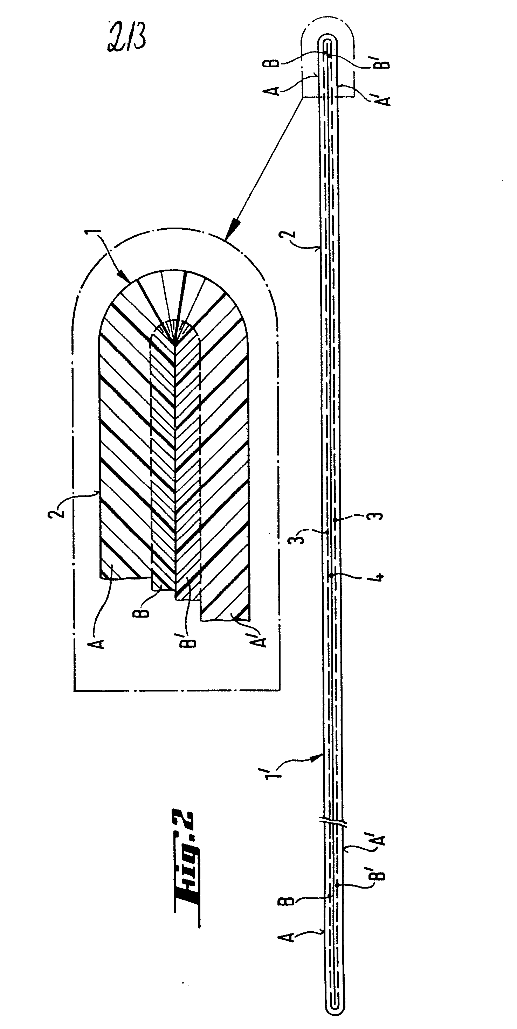

Figur 2 zeigt die durch Flachlegen und Verblocken der Innenschichten B, B' aus dem in Figur 1 dargestellten Blasschlauch 1 gebildete koextrudierte vierlagige Verbundfolie 1' (verblockter Schlauch) mit ihren aus LLDPE gebildeten Aussenlagen A, A' und den aus dem Äthylen-Vinylacetatcopolymeren gebildeten Innenlagen B, B'. Die Aussenlagen A, A' haben eine Dicke von 60 μm, die Innenlagen B, B' sind 30 μm dick, woraus sich eine Gesamtdicke von 180 μm ergibt.

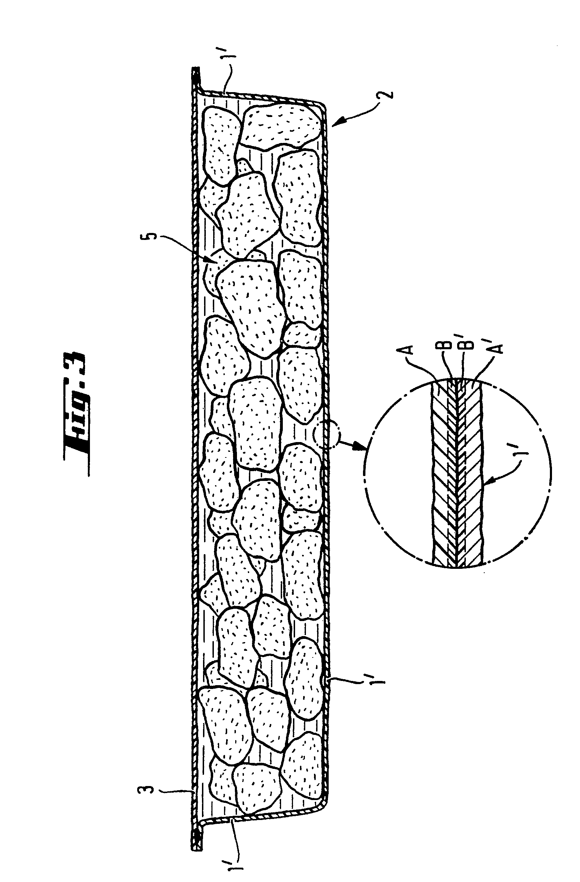

In Figur 3 ist eine tieffrostbeständige Vakuumtiefziehverpackung 2 dargestellt, in der sich als Verpackungsgut Gulasch 5 befindet. Die Oberfolie 3 ist eine an sich bekannte, zweilagige Verbundfolie, bestehend aus einer 30 μm dicken, ungereckten Polyamidfolie, laminiert mit einer 75 μm dicken ungereckten Polyäthylenfolie. Die Unterfolie 2 besteht aus der zu den Figuren 1 und 2 beschriebenen, erfindungsgemäss verwendeten koextrudierten Verbundfolie 1' (verblockter Schlauch).

Beispiel

Das nachfolgende Beispiel beschreibt eine mehrlagige Tiefziehfolie, wie sie bei der Tiefziehverpackung eines scharfkantigen Metallpulvers mit Körnern von ca. 1–3 mm Durchmesser erfindungsgemäss Verwendung findet, das als Schweisshilfsmittel unter der Handelsbezeichnung «Thermit» von der Firma Goldschmidt, Essen, vertrieben wird.

Die Aussenlagen A, A' einer solchen mehrlagigen Tiefziehfolie bestehen aus LLDPE einer Dichte von ca. 0,92 g/cm³ und einem Schmelzindex von 1. Die Dicke einer jeden Aussenlage beträgt 80 μm.

Die Aussenlagen A, A' sind mit den Innenlagen B, B', die aus einem Copolymeren des Äthylens mit 8 Gew.-% Vinylacetatanteil und einem Schmelzindex von 1,5 bestehen, durch Schmelzverbindung verbunden, während die Innenlagen B, B' miteinander verblockt sind. Die Innenlagen haben eine Dicke von je 40 μm, woraus sich eine Gesamtdicke der mehrlagigen Tiefziehfolie von 240 μm ergibt.

Wie sich aus einem Verpackungsversuch ergab, weist die beschriebene mehrlagige Tiefziehfolie eine ausgezeichnete Durchstossfestigkeit gegenüber dem scharfkantigen Metallpulver auch bei Temperaturen, die unter dem Gefrierpunkt liegen, auf.

**Patentansprüche**

1. Verwendung einer mehrlagigen koextrudierten Verbundfolie (1') mit zwei in Material und Dicke übereinstimmenden Aussenlagen (A, A') aus linearem Polyäthylen oder High-Density-Polyäthylen (Niederdruckpolyäthylen, HDPE) und zwei in Material und Dicke übereinstimmenden Innenlagen (B, B'), bestehend aus einem mit Metallionen vernetzten Äthylen-Methacrylsäurecopolymeren oder aus einem Äthylen-Vinylacetatcopolymeren, bei der die Aussenlagen (A, A') mit den Innenlagen (B, B') durch Schmelzverbindung verbunden sind und die Innenlagen (B, B') miteinander verblockt sind, als selbständige Tiefziehfolie, insbesondere als Unterfolie für die Herstellung von tieffrostbeständigen Vakuumtiefziehverpackungen oder von Vakuumtiefziehverpackungen scharfkantiger Verpackungsgüter.

2. Verwendung nach Anspruch 1, mit der Massgabe, dass bei Innenlagen (B, B') aus einem Äthylen-Vinylacetatcopolymeren dieses Copolymere 8 bis 35 Gew.-%, bevorzugt 20 bis 28 Gew.-% Vinylacetat enthält.

3. Verwendung nach Anspruch 1 oder 2, mit der Massgabe, dass die Gesamtdicke der Verbundfolie (1') zwischen 100 und 300 μm liegt, wobei auf die Aussenlagen (A, A') eine Dicke von nicht mehr als $4/5$ und nicht weniger als $1/2$ und auf die Innenlagen (B, B') eine Dicke von nicht mehr als $1/2$ und nicht weniger als $1/5$ entfällt.

**Revendications**

1. Utilisation d'une feuille composite coextrudée multicouches (1') avec deux couches externes (A, A') en polyéthylène linéaire ou en polyéthylène haute densité (polyéthylène basse pression HDPE), concordant en ce qui concerne la matière et l'épaisseur, et deux couches internes (B, B') concordant en ce qui concerne la matière et l'épaisseur, constituée d'un copolymère (éthylène/acide méthacrylique) réticulé avec des ions métalliques ou d'un copolymère (éthylène/acétate de vinyle), dans laquelle les couches externes (A, A') sont fixées aux couches internes (B, B') par liaison par fusion et les couches internes (B, B') adhèrent l'une à l'autre, sous la forme d'une feuille indépendante pour emboutissage, en particulier comme feuille inférieure pour la fabrication d'emballages emboutis sous vide, résistant à la surgélation ou d'emballages emboutis sous vide, pour marchandises à emballer ayant des arêtes vives.

2. Utilisation selon la revendication 1, avec la condition que, dans le cas de couches internes, (B, B') en un copolymère (éthylène/acétate de vinyle), ce copolymère contient 8 à 35% en poids, de préférence 20 à 28% en poids, d'acétate de vinyle.

3. Utilisation selon la revendication 1 ou 2, avec la condition que l'épaisseur totale de la feuille composite (1') est comprise entre 100 et 300 microns, dont les couches externes (A, A') constituent au plus les quatre cinquièmes et au moins la moitié, et les couches internes (B, B'), au plus la moitié et au moins le cinquième.

## Claims

1. Use of a multilayered co-extruded composite film (1') having two external layers (A, A') which correspond with regard to material and thickness and which comprise linear polyethylene or high-density polyethylene (low-pressure polyethylene, HDPE) and having two internal layers (B, B') which correspond with regard to material and thickness and which comprise an ethylene/methacrylic acid copolymer cross-linked with metal ions or an ethylene/vinyl acetate copolymer, in which film the external layers (A, A') are connected to the internal layers (B, B') by melt-bonding and the internal layers (B, B') are connected to one another by blocking, as self-supporting deepdrawn film, especially as film for the bottom part in the manufacture of deep-freeze-resistant vacuum deep-drawn packaging or vacuum deep-drawn packaging for sharp-edged packaged goods.

2. Use according to claim 1, with the proviso that, in the case of internal layers (B, B') comprising an ethylene/vinyl acetate copolymer, this copolymer contains from 8 to 35% by weight, preferably from 20 to 28% by weight, vinyl acetate.

3. Use according to claim 1 or 2, with the proviso that the total thickness of the composite film (1') is from 100 to 300 $\mu m$, the external layers (A, A') having a thickness of not more than $4/5$ and not less than $1/2$ of the total thickness and the internal layers (B, B') having a thickness of not more than $1/2$ and not less than $1/5$ of the total thickness.

Fig.1

Fig. 2

0 123 974

Fig.3